# EUROPÄISCHE PATENTSCHRIFT

(11) **EP 2 520 676 B1**
(45) Veröffentlichungstag und Bekanntmachung des Hinweises auf die Patenterteilung: **23.07.2014**
(21) Anmeldenummer: 12004215.5
(22) Anmeldetag: 01.06.2012
(51) Int. Cl.: C22B 11/00, C22B 7/00

(54) **Vorrichtung für das Edelmetall-Recycling**
Device for recycling of precious metals
Dispositif de recyclage des métaux précieux

(43) Veröffentlichungstag der Anmeldung: 07.11.2012
(73) Patentinhaber: Koras, Thorsten, 75180 Pforzheim (DE)
(72) Erfinder: Koras, Thorsten, 75180 Pforzheim (DE)
(74) Vertreter: Schön, Thilo

(56) Entgegenhaltungen:
- US-A- 4 426 251
- US-B1- 6 613 271

## Beschreibung

Die Erfindung betrifft eine Vorrichtung für das Edelmetall-Recycling, insbesondere für das Recycling von Gold, nach dem Oberbegriff des Anspruchs 1.

Schon seit sehr langer Zeit ist es bekannt, dass man mit sogenanntem Königswasser (eine Mischung aus Salzsäure und Salpetersäure) metallisches Gold oxidieren und somit in eine wässrige Lösung überführen kann. Solches Königswasser wird auch noch heutzutage zur Abscheidung von Gold, beispielsweise aus technischen Abfällen oder von vergoldeten Gebrauchsgegenständen, verwendet.

Gold löst sich (im Gegensatz zu Platin) auch in kaltem Königswasser (also im Wesentlichen bei Zimmertemperatur), jedoch nimmt die Reaktionsgeschwindigkeit mit steigender Temperatur zu, so dass auch zum Abscheiden von Gold häufig heißes Königswasser mit einer Temperatur von 60°C eingesetzt wird. Der Einsatz von heißem Königswasser ist jedoch mit Nachteilen behaftet, insbesondere da heißes Königswasser nur in Glasgefäßen gehandhabt werden kann und da relativ große Mengen aggressiver Dämpfe entstehen.

Es wurden deshalb in der Vergangenheit Vorrichtungen entwickelt, welche auch beim Einsatz von kaltem Königswasser eine akzeptable Reaktionsgeschwindigkeit erzielen. Solche Vorrichtungen, wie sie der vorliegenden Erfindung als gattungsbildend zu Grunde liegen, sind wie folgt aufgebaut: Das zentrale Bauelement einer solchen Vorrichtung ist eine um eine Drehachse drehbar angeordnete Trommel, wobei die Drehachse schräg zur Horizontalen (beispielsweise in einem Winkel von 20 bis 30 Grad) verläuft. Diese Trommel weist einen hohlzylindrischen Mantel und zwei diesen Mantel an seinen Stirnseiten verschließende Flansche auf, wobei diese Flansche die Stirnwände der Trommel bilden. An dem unteren Flansch ist koaxial ein Elektromotor angeschlossen, mit dem sich die Trommel in Rotation versetzen lässt. Der obere Flansch weist eine zur Drehachse koaxiale Bohrung auf, durch die sich ein Rohr ins Innere der Trommel erstreckt. Dieses Rohr ist mittels einer Drehdichtung mit dem oberen Flansch verbunden. Mit diesem Rohr sind weiterhin zwei Säurebehälter verbunden, wobei einer dieser Säurebehälter für die Aufnahme von Salzsäure und der andere für die Aufnahme von Salpetersäure vorgesehen ist. Der Mantel der Trommel weist eine verschließbare Öffnung auf, über die das zu bearbeitende Material zugeführt werden kann und das entgoldete Material sowie die Lösung mit dem gelösten Gold entnommen werden können.

Hiervon ausgehend stellt sich die vorliegende Erfindung die Aufgabe, eine solche Vorrichtung dahingehend weiterzubilden, dass mit ihr eine weiter erhöhte Reaktionsgeschwindigkeit erreicht werden kann, ohne dass eine Erwärmung der zugeführten Säuren notwendig ist.

Diese Aufgabe wird durch eine Vorrichtung mit dem Merkmal des Anspruchs 1 gelöst.

Es hat sich herausgestellt, dass die Reibung, welche bei den gattungsgemäßen Vorrichtungen für die Erhöhung der Reaktionsgeschwindigkeit mitverantwortlich zu sein scheint, schon allein dadurch signifikant erhöht werden kann, dass die Innenwand des Mantels der Trommel nicht mehr einen kreisförmigen, sondern einen vieleckigen Querschnitt aufweist. Dies scheint darin begründet zu liegen, dass die Bewegung des zumeist als Granulat vorliegenden zu entgoldenden Materials durch den vieleckigen Qurschnitts ungleichmäßiger ist, als es bei einem runden Querschnitt der Fall ist - die Granulatteilchen werden ständig beschleunigt und abgebremst. Hierbei haben sich insbesondere ein fünfeckiger, sechseckiger, siebeneckiger oder achteckiger Querschnitt, wobei die Vielecke vorzugsweise regelmäßige Vieleckige sind, als ideal herausgestellt. Der Herstellungs-Mehraufwand für eine erlindungsgemaße Vorrichtung ist gegenüber einer Vorrichtung gemäß dem Stand der Technik gering und die Handhabung der Vorrichtung unterscheidet sich von der Handhabung einer solchen Vorrichtung gemäß dem Stand der Technik nicht, mit Ausnahme des höheren Durchsatzes.

In der Regel ist es notwendig, das obere Ende der Trommel abzustützen, da die Drehdichtung, welche das Rohr mit der oberen Stirnwand (Flansch) verbindet, in der Regel nicht zur Aufnahme von hohen Kräften ausgelegt ist. Daher ist es zu bevorzugen, dass, wie dies im Stand der Technik grundsätzlich bekannt ist, wenigstens eine Abstützrolle vorgesehen ist, welche das obere Ende der Trommel abstützt. Wenn jedoch die Innenwand des Mantels der Trommel einen vieleckigen Querschnitt haben soll, so ist es aus herstellungstechnischer Sicht zu bevorzugen, dass auch die Außenwand einen entsprechenden mehreckigen Querschnitt aufweist. Eine Außenwand mit einem vieleckigen Querschnitt ist jedoch nicht gut dafür geeignet, durch Abstützrollen abgestützt zu werden. Es ist deshalb zu bevorzugen, dass die Mantelfläche der Trommel eine nach außen weisende Abstützfläche mit kreisrundem Querschnitt aufweist. Hierfür wird bevorzugt der obere Flansch genutzt.

Die Erfindung wird nun anhand von Ausführungsbeispielen mit Bezug auf die Figuren näher erläutert. Hierbei zeigen
- Figur 1: einen schematisierten Längsschnitt durch eine erfindungsgemäße Vorrichtung,
- Figur 2: einen Schnitt entlang der Ebene A-A aus Figur 1,
- Figur 3: eine Variante zu dem in Figur 2 Gezeigten und
- Figur 4: eine weitere Variante zu dem in Figur 2 Gezeigten.

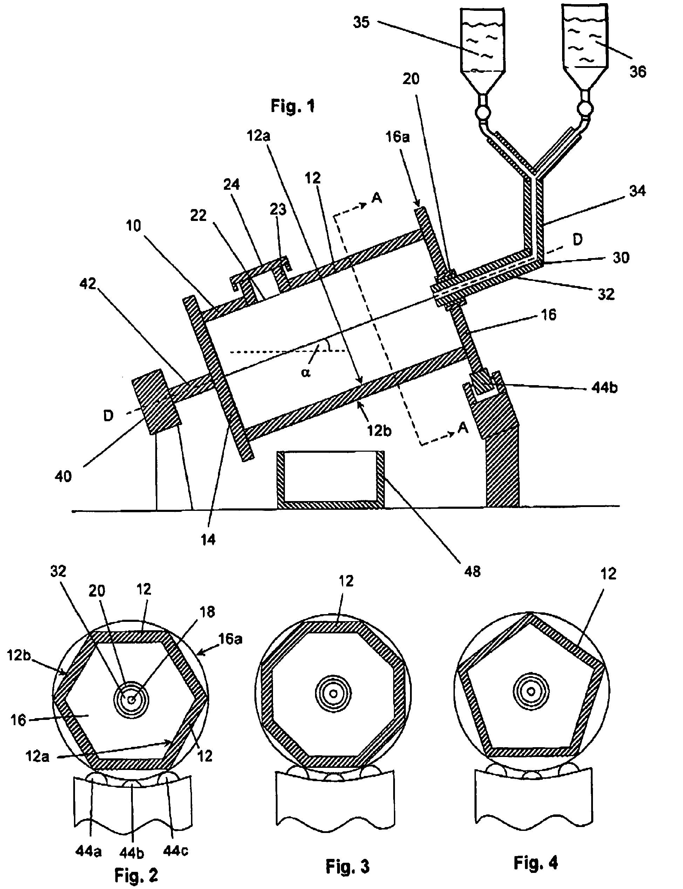

Die Figur 1 zeigt schematisch eine Vorrichtung zum Abscheiden von Gold aus Feststoffen. Diese Vorrichtung weist eine Trommel 10 mit einem eine Innenwand 12a und eine Außenwand 12b aufweisenden Mantel 12, mit einem unteren Flansch 14 und einem oberen Flansch 16 auf. Die Trommel ist um ihre Drehachse D-D schräg bezüglich der Horizontalen angeordnet, wobei der Neigungswinkel α gegen die Horizontale vorzugsweise zwischen 20° und 40°, vorzugsweise ca. 30° beträgt. Hierdurch ergibt sich eine Orientierung der Trommel 10 dahingehend, dass sie ein unteres Ende und ein oberes Ende aufweist. In der Nähe des unteren Endes weist der Mantel 12 eine Öffnung 22 auf, von der sich ein Zugangsflansch 23 erstreckt, welcher mittels eines Deckels 24 verschließbar ist. Vom unteren Flansch 14 erstreckt sich koaxial zur Drehachse D-D eine Antriebsachse 42 zu einem Elektromotor 40. Unterhalb der Trommel 10 ist eine Auffangwanne 48 anordenbar, in die bei geeigneter Drehposition der Trommel 10 der Trommelinhalt durch die Öffnung 22 entleerbar ist. Der obere Flansch 16 weist eine zur Drehachse koaxiale Bohrung 18 auf. In diese Bohrung erstreckt sich der axiale Abschnitt 32 eines Rohres 30. Dieser axiale Abschnitt 32 des Rohres 30 ist über eine Drehdichtung 20 dicht mit dem oberen Flansch 16 verbunden, in Drehrichtung jedoch entkoppelt, so dass das Rohr 30 bei Drehung der Trommel 10 starr bleibt. Es sind zwei Säurebehälter 35, 36 vorgesehen, deren Inhalt über das Rohr 30 in das Innere der Trommel abgelassen werden kann. Es sind entsprechende Absperrventile vorgesehen. Zur Abstützung des oberen Endes der Trommel 10 sind Abstützrollen 44a bis c vorgesehen, auf welchen die Mantelfläche 16a des oberen Flansches, welche somit als Abstützfläche dient, aufliegt.

Wie man der Figur 2 unmittelbar entnimmt, ist der Mantel 12 kein Hohlzylinder mit kreisrundem Querschnitt, sondern die Innenwand (12a) und die Außenwand (12b) haben einen vieleckigen Querschnitt, nämlich den Querschnitt eines regelmäßigen Sechseckes. Da die Trommel vorzugsweise aus einem Kunststoff, nämlich insbesondere aus Polypropylen, besteht, ist es grundsätzlich möglich, den Mantel 12 der Trommel 10 im Spritzgussverfahren herzustellen. Auf Grund der Größe und der relativ geringen Stückzahl, in welcher solche Anlagen gebaut werden, ist dies in der Regel jedoch zu aufwendig. Deshalb ist es zu bevorzugen, den Mantel 12 aus abgeschrägten Kunststoffplatten zu schweißen. Hierdurch kommt auch der sechseckige Querschnitt der Außenwand zustande, welche für die Funktionsweise der Vorrichtung ohne Bedeutung ist.

Die Funktionsweise der Vorrichtung ist grundsätzlich aus dem Stand der Technik bekannt: Über den Zugangsflansch 23 wird in einer Stellung, wie sie der Figur 1 entspricht, der zu recycelnde Feststoff, meist in Form eines Granulats, in das Innere der Trommel eingebracht. Anschließend wird der Zugangsflansch 23 mit dem Deckel 24 verschlossen. Es werden nun über das Rohr 30 Salzsäure und Salpetersäure im richtigen Mischungsverhältnis zugegeben und die Trommel 10 mittels des Motors 40 in Drehung versetzt. Durch den vieleckigen Querschnitt der Innenwand 12a des Mantels wird die Reibung zwischen Granulat und Innenwand des Mantels wie auch die "innere Reibung" des Granulats erhöht, wodurch die Reaktionsgeschwindigkeit bei der Lösung des Goldes beschleunigt wird. Nachdem der Lösevorgang abgeschlossen ist, wird die Trommel 10 über den Zugangsflansch 23 entleert, wobei die Trommel gegenüber dem in Figur 1 Gezeigten um 180 Grad gedreht ist.

Ein regelmäßiger sechseckiger Querschnitt der Innenwand 12a hat sich als sehr günstig herausgestellt, ebenfalls als günstig hat sich ein achteckiger und ein fünfeckiger Querschnitt (siehe Figuren 3 und 4) herausgestellt. Bei Velecken mit noch mehr Ecken nimmt der erfindungsgemäße Effekt in der Regel ab, eine zu geringe Anzahl an Ecken ( Dreieck, Viereck) hat sich ebenfalls als nicht ideal erwiesen.
- 10: Trommel
- 12: Mantel
- 12a: Innenwand
- 12b: Außenwand
- 14: unterer Flansch
- 16: oberer Flansch
- 16a: Mantelfläche (Abstützfläche)
- 18: Bohrung
- 20: Drehdichtung
- 22: Öffnung
- 23: Zugangsflansch
- 24: Deckel
- 30: Rohr
- 32: axialer Abschnitt
- 34: vertikaler Abschnitt
- 35: erster Säurebehälter (für Salzsäure)
- 36: zweiter Säurebehälter (für Salpetersäure)
- 40: Motor
- 42: Antriebsachse
- 44a-c: Abstützrolle
- 48: Auffangwanne

## Patentansprüche

1. Vorrichtung für das Edelmetall-Recycling mit
einer sich um eine schräg zur Horizontalen verlaufenden Drehachse (D-D) erstreckenden, drehbar gelagerten Trommel (10) mit einem Mantel (12) und zwei Stirnwänden, wobei
der Mantel (12) wenigstens eine verschließbare Öffnung (22) aufweist und wobei
die obere Stirnwand eine Bohrung (18) aufweist, durch die ein Rohr (30) ins Innere der Trommel (10) mündet,
einer Antriebseinrichtung, mittels der die Trommel (10) in Rotation versetzbar ist, und
wenigstens einem mit dem Rohr (30) in Fließverbindung stehenden Säurebehälter (35, 36),
**dadurch gekennzeichnet, dass**
zumindest die Innenwand (12a) des Mantels (12) einen vieleckigen Querschnitt hat.

2. Vorrichtung nach Anspruch 1, **dadurch gekennzeichnet, dass** das Vieleck ein Fünfeck, Sechseck, Siebeneck oder Achteck ist.

3. Vorrichtung nach einem der vorangehenden Ansprüche, **dadurch gekennzeichnet, dass** das Vieleck ein regelmäßiges Vieleck ist.

4. Vorrichtung nach einem der vorangehenden Ansprüche, **dadurch gekennzeichnet, dass** auch die Außenwand (12b) des Mantels ein Vieleck ist, so dass der Mantel aus mehreren miteinander verschweißten Platten besteht.

5. Vorrichtung nach einem der vorangehenden Ansprüche, **dadurch gekennzeichnet, dass** die Trommel eine nach außen weisende Abstützfläche mit kreisrundem Querschnitt aufweist welche sich konzentrisch zur Drehachse erstreckt, und dass wenigstens eine Abstützrolle (44a-c) vorgesehen ist, welche die Trommel über die Abstützfläche abstützt.

6. Vorrichtung nach Anspruch 5, **dadurch gekennzeichnet, dass** die Abstützfläche die Mantelfläche (16a) eines Flansches (16) ist, welcher die obere Stirnwand bildet.

7. Vorrichtung nach einem der vorangehenden Ansprüche, **dadurch gekennzeichnet, dass** die Antriebseinrichtung ein Motor (40) ist, welcher mittels einer Antriebsachse an die untere Stirnwand gekoppelt ist.

8. Vorrichtung nach einem der vorangehenden Ansprüche, **dadurch gekennzeichnet, dass** zwei Säurebehälter mit dem Rohr in Fließverbindung stehen.

## Claims

1. A device for the recycling of precious metals, having
a rotatably mounted drum (10) which extends by an axis of rotation (D-D) that is inclined to the horizontal and having an envelope (12) and two end walls, with
the envelope (12) exhibiting at least one closable opening (22) and with
the upper end wall exhibiting a hole (18) through which a tube (30) opens out into the interior of the drum (10),
a driving device by means of which the drum (10) can be set in rotation, and
at least one acid reservoir (35, 36) connecting with the tube (30) in the direction of flow,
**characterised in that**
at least the inner wall (12a) of the envelope (12) has a polygonal cross-section.

2. The device of claim 1 wherein the polygon is a pentagon, hexagon, heptagon or octagon.

3. The device of any one of the preceding claims wherein the polygon is a regular polygon.

4. The device of any one of the preceding claims wherein the outer wall (12b) of the envelope is also a polygon such that the envelope comprises a plurality of panels welded to one another.

5. The device of any one of the preceding claims wherein the drum exhibits an outwardfacing support surface circular in cross-section and extending concentrically to the axis of rotation, and at least one support roller (44a-c) is provided which supports the drum on its support surface.

6. The device of claim 5 wherein the support surface is the edge face (16a) of a flange (16) which constitutes the upper end wall.

7. The device of any one of the preceding claims wherein the driving device is a motor (40) coupled to the lower end wall by way of a driving shaft.

8. The device of any one of the preceding claims wherein two acid reservoirs connect with the tube in the direction of flow.

## Revendications

1. Dispositif de recyclage des métaux précieux comprenant
un tambour (10) monté en rotation, s'étendant selon un axe de rotation (D-D) incliné par rapport à l'horizontale, ledit tambour comprenant une paroi latérale (12) et deux parois d'extrémité,
la paroi latérale (12) présentant au moins une ouverture (22) pouvant être fermée et
la paroi d'extrémité supérieure présentant un alésage (18), à travers lequel un tuyau (30) débouche à l'intérieur du tambour (10),
un dispositif d'entraînement, au moyen duquel le tambour (10) peut être mis en rotation, et
au moins un réservoir à acide (35, 36) en liaison d'écoulement avec le tuyau (30),
**caractérisé en ce que**
au moins la face intérieure (12a) de la paroi latérale (12) a une section transversale polygonale.

2. Dispositif selon la revendication 1, **caractérisé en ce que** le polygone est un pentagone, un hexagone, un heptagone ou un octogone.

3. Dispositif selon l'une des revendications précédentes, **caractérisé en ce que** le polygone est un polygone régulier.

4. Dispositif selon l'une des revendications précédentes, **caractérisé en ce que** la face extérieure (12b) de la paroi latérale est également un polygone, de sorte que la paroi latérale est constituée de plusieurs plaques soudées l'une à l'autre.

5. Dispositif selon l'une des revendications précédentes, **caractérisé en ce que** le tambour présente une surface d'appui tournée vers l'extérieur avec une section transversale circulaire qui s'étend concentriquement par rapport à l'axe de rotation et **en ce qu'**il est prévu au moins un galet de support (44a-c) qui supporte le tambour sur la surface d'appui.

6. Dispositif selon la revendication 5, **caractérisé en ce que** la surface d'appui est la surface latérale (16a) d'un flasque (16) qui forme la paroi d'extrémité supérieure.

7. Dispositif selon l'une des revendications précédentes, **caractérisé en ce que** le dispositif d'entraînement est un moteur (40) couplé à la paroi d'extrémité inférieure au moyen d'un axe d'entraînement.

8. Dispositif selon l'une des revendications précédentes, **caractérisé en ce que** deux réservoirs d'acide sont en liaison d'écoulement avec le tuyau.
